# EUROPEAN PATENT APPLICATION

(11) **EP 4 671 771 A1**
(43) Date of publication of application: **31.12.2025**
(21) Application number: 23924252.2
(22) Date of filing: 22.12.2023
(51) Int. Cl.: G01N 35/10

(54) **AUTOMATIC ANALYSIS DEVICE AND METHOD FOR REPLACING SELF-PRIMING PUMP**

(30) Priority: 24.02.2023 JP 2023027122
(71) Applicant: HITACHI HIGH-TECH CORPORATION, Tokyo 105-6409 (JP)
(72) Inventor: MATSUNAGA, Yoshiki, Tokyo 105-6409 (JP); HAMASAKI, Koshin, Tokyo 105-6409 (JP); TAKADA, Eiichiro, Tokyo 105-6409 (JP)
(74) Representative: Strehl & Partner mbB
(86) International application number: PCT/JP2023/046133
(87) International publication number: WO 2024/176608

(57) **Abstract**

To provide an automatic analyzer capable of safely exchanging a self-feeding pump feeding a liquid that ill affects a human body and/or equipment and an exchanging method of the self-feeding pump. An automatic analyzer for analyzing a sample, includes a first arrangement section in which a first container for containing a first liquid that ill affects a human body and/or equipment is arranged; a second arrangement section in which a second container for containing a second liquid that does not ill affect the human body and/or the equipment is arranged; and a self-feeding pump that feeds the first liquid and the second liquid to a third container arranged in a third arrangement section, in which the self-feeding pump is exchanged after the second liquid is fully supplied to fill the inside thereof.

## Description

### Technical Field

The present invention relates to an automatic analyzer and a method of exchanging a self-feeding pump.

### Background Art

In an automatic analyzer for analyzing a sample such as blood and urine provided from a patient, a liquid such as a sample and a reagent is fed from a certain container to another container by drive of a pump.

Patent Literature 1 discloses an automatic analyzer as a feeding pump for feeding a calibration sample from a calibration sample bottle to a sample container. The automatic analyzer includes a tube pump that is one of self-feeding pumps to control a feeding amount based on a duration required for the feeding pump to feed a calibration sample of a predetermined amount. The self-feeding pump is a pump that requires no priming, and easy to use in comparison to non-self-feeding pumps, which require priming.

### Citation List

### Patent Literature

Patent Literature 1: Japanese Unexamined Patent Application Publication No. 2008-51620

### Summary of Invention

### Technical Problem

However, in Patent Literature 1, safety exchange of the self-feeding pump of the automatic analyzer is not taken into consideration. The self-feeding pump of the automatic analyzer may feed a liquid that ill affects a human body and/or equipment. An operator who exchanges the self-feeding pump in which such a liquid remains on the inner wall may be ill affected.

Then, the present invention has an object to provide an automatic analyzer capable of safely exchanging a self-feeding pump feeding a liquid that ill affects a human body and an exchanging method of the self-feeding pump.

### Solution to Problem

To achieve the above object, the present invention provides an automatic analyzer for analyzing a sample, the automatic analyzer including: a first arrangement section in which a first container for containing a first liquid that ill affects a human body and/or equipment is arranged; a second arrangement section in which a second container for containing a second liquid that does not ill affect the human body and/or the equipment is arranged; and a self-feeding pump for feeding the first liquid and the second liquid to a third container arranged in a third arrangement section, in which the self-feeding pump is exchanged after the second liquid is fully supplied to fill the inside of the self-feeding pump.

In addition, the present invention provides a method of exchanging the self-feeding pump for feeding the first liquid that ill affects the human body and/or the equipment, the method including: a step of supplying the second liquid until the second liquid that does not ill affect the human body and/or the equipment fills the inside of the self-feeding pump; a step of discharging the second liquid from the self-feeding pump; and a step of exchanging the self-feeding pump.

### Advantageous Effects of Invention

The present invention may provide an automatic analyzer capable of safely exchanging a self-feeding pump feeding a liquid that ill affects a human body and/or equipment and a method of exchanging the self-feeding pump.

### Brief Description of Drawings

Fig. 1 is a schematic view showing a configuration example of an automatic analyzer.
Fig. 2 is a view showing a configuration example around a self-feeding pump.
Fig. 3 is a flow chart showing one example of the processing according to a first embodiment.
Fig. 4 is a view showing another configuration example around the self-feeding pump.
Fig. 5 is a view showing another configuration example around the self-feeding pump.
Fig. 6 is a view showing another configuration example around the self-feeding pump.

### Description of Embodiments

Hereinafter, preferred embodiments of an automatic analyzer of the present invention are explained in reference to the appended drawings. Note that, in the following explanation and the appended drawings, functional components having the same functional configuration are given the same reference signs not to repeat explanation.

### First Embodiment

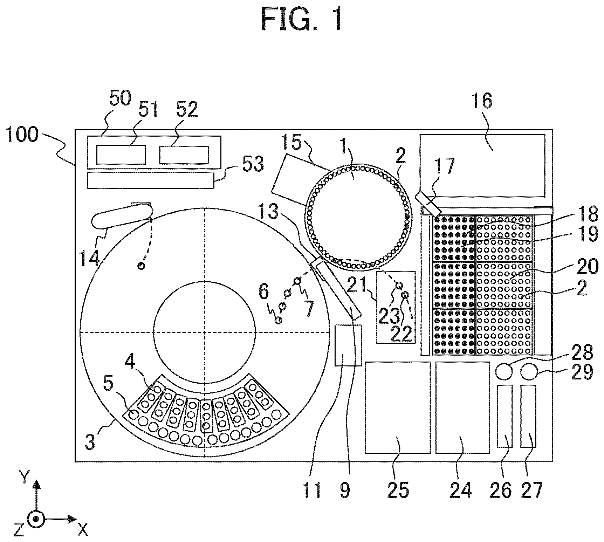

Referring to Fig. 1, one example of an overall configuration of an automatic analyzer 100 is explained. The automatic analyzer 100 is a device for analyzing a sample such as blood and urine provided from a patient, and includes an incubator 1, a sample reagent disk 3, a dispensing unit 9, a cleaning chamber 13, a reagent stirring unit 14, a spectrophotometer 15, a detecting unit 16, a carrying unit 17, a water feeding tank 24, a waste liquid tank 25, and a controller 50. Hereinafter, each unit is explained. Note that the X direction and the Y direction shown in Fig. 1 are orthogonal to one another to form a horizontal surface, and the X direction is in the lateral direction of the automatic analyzer 100, and the Y direction is in the depth direction of the automatic analyzer 100. In addition, the Z direction is in the vertical direction, and in the height direction of the automatic analyzer 100.

A reaction container 2 to which a sample and a reagent are dispensed is arranged along the circumference of the incubator 1. The incubator 1 is rotatably driven to move the reaction container 2 to the positions accessed by the dispensing unit 9 and the carrying unit 17 and to the spectrophotometer 15. In addition, the incubator 1 is maintained at a predetermined temperature. Note that the unused reaction container 2 is held on a container tray 20, and carried from the container tray 20 to the incubator 1 by the carrying unit 17.

A sample container 5 and a reagent bottle 4 are stored on the sample reagent disk 3. The sample container 5 contains a sample provided from a patient. The reagent bottle 4 contains multiple reagents that react with the sample. The sample reagent disk 3 is rotatably driven to move the sample container 5 to a sample aspiration port 7 at the position accessed by the dispensing unit 9, and to move the reagent bottle 4 to a reagent aspiration port 6 at the position accessed by the dispensing unit 9. The reagents in the reagent bottle 4 are stirred by the reagent stirring unit 14, as required.

The dispensing unit 9 has a dispensing nozzle used to dispense the samples and reagents, and moves along the arcuate trajectory shown by the dotted line between the sample reagent disk 3 and the incubator 1. A dispensing pump 11 is connected to the dispensing nozzle. The dispensing is performed such that the dispensing nozzle is driven by the dispensing pump 11 to aspirate the sample from the sample container 5 and the reagents from the reagent bottle 4, and to discharge the aspirated sample and reagents to the reaction container 2. The dispensing nozzle after dispensing the sample and the reagents are cleaned in the cleaning chamber 13 arranged on the arcuate trajectory. Pure water used to clean the dispensing nozzle is fed from the water feeding tank 24, and waste water generated by the cleaning is stored in the waste liquid tank 25. Note that the multiple dispensing units 9 may be provided.

In the reaction container 2 to which the sample and the reagents have been discharged, reactions between the sample and the reagents are facilitated to generate a reaction liquid by maintaining the incubator 1 at a predetermined temperature.

The spectrophotometer 15 includes, for example, a light source for emitting light to the reaction liquid and a detector for detecting the light transmitted through the reaction liquid to measure an absorbance of the reaction liquid in the reaction container 2. The measurement result in the spectrophotometer 15 is sent to the controller 50.

The detecting unit 16 has a photodetector such as a photomultiplier tube, and performs optical measurement to detect a labeling substance contained in the reaction liquid. Note that the reaction container 2 is carried from the incubator 1 to the detecting unit 16 by the carrying unit 17, and a first liquid is supplied from a first liquid bottle 26 to the detecting unit 16 by drive of a first liquid pump 28. The first liquid is mixed with the reaction liquid to generate electrochemiluminescence and chemiluminescence, luminous amounts of which are measured by the photodetector to detect the labeling substance. The detection results in the detecting unit 16 are sent to the controller 50. In addition, a cleaning liquid is supplied, by drive of a cleaning liquid pump 29, from a cleaning liquid bottle 27 to the detecting unit 16 after the optical measurement. Note that a self-feeding pump, which requires no priming, is used as the first liquid pump 28 and the cleaning liquid pump 29.

A dispensing tip 18 may be mounted to the end of the dispensing nozzle to prevent contamination during dispensing. The unused dispensing tip 18 is held by a tip tray 19, and carried from the tip tray 19 to a tip mounting position 22 by the carrying unit 17. The dispensing tip 18 after used for dispensing is disposed to a disposal box 21 through a tip disposal port 23. In addition, the reaction container 2 after used for analysis is also disposed to the disposal box 21.

The controller 50 is a computer for controlling operation of the incubator 1 and the dispensing unit 9, storing detection results in the detecting unit 16, and displaying the results as analysis results. The controller 50 has a control unit 51 and a storing unit 52, and is connected to an input and output unit 53. The control unit 51 is an arithmetic unit such as a CPU (Central Processing Unit). The storing unit 52 is a storing device such as an HDD (Hard Disk Drive) and an SSD (Solid State Drive) to store operation programs that operate each unit of the automatic analyzer 100. The input and output unit 53 includes a keyboard, a mouse, a liquid crystal display, and a touch panel, in which instructions related to operation of the automatic analyzer 100 are inputted and analysis results are outputted.

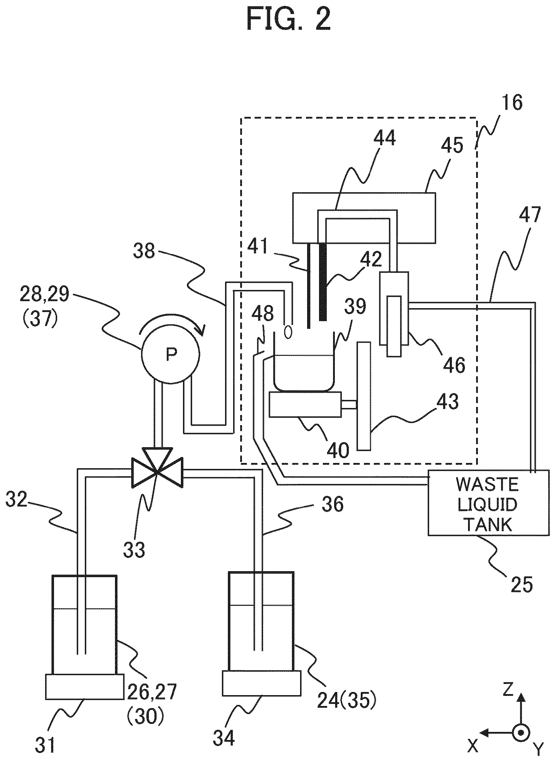

Referring to Fig. 2, one example of a configuration around the first liquid pump 28 and the cleaning liquid pump 29 that are self-feeding pumps 37 is explained. Note that, in the following explanation, the first liquid bottle 26 and the cleaning liquid bottle 27 may be called a first container 30, the first liquid pump 28 and the cleaning liquid pump 29 may be called the self-feeding pump 37, and the water feeding tank 24 may be called a second container 35.

The self-feeding pump 37 is a pump for feeding liquids from the first container 30 and the second container 35 to the detecting unit 16, and is, for example, a tube pump.

Hereinafter, a liquid that ill affects a human body and/or equipment is called a first liquid, and a liquid that does not ill affect the human body and/or the equipment is called a second liquid. The first liquid is assumed as an alkaline liquid or an acidic liquid (for example, a system reagent such as a detergent). The second liquid is assumed as a neutral liquid (for example, water).

The first container 30 contains the first liquid, and is arranged on a first arrangement section 31. The first arrangement section 31 may include a sensor for detecting the presence or absence of the first container 30. Detection signals outputted from the sensor are sent to the controller 50. A first flow path 32 connected to a switching unit 33 is inserted into the first container 30.

The second container 35 contains the second liquid, and is arranged on a second arrangement section 34. A second flow path 36 connected to the switching unit 33 is inserted into the second container 35.

The switching unit 33 is connected to the first flow path 32, the second flow path 36, and a third flow path 38. The switching unit 33 switches between the opening of the flow path from the first flow path 32 to the third flow path 38 and the opening of the flow path from the second flow path 36 to the third flow path 38. The switching unit 33 is, for example, a three-way valve. The third flow path 38 is connected to the detecting unit 16 from the switching unit 33 via the self-feeding pump 37.

The detecting unit 16 has a third container 39, a third arrangement section 40, a liquid surface sensor 41, an aspiration nozzle 42, an elevating unit 43, a fourth flow path 44, an optical measuring unit 45, and a pump 46.

The third container 39 contains the reaction liquid, and is arranged on the third arrangement section 40. The first liquid and the cleaning liquid are fed to the third container 39 by drive of the self-feeding pump 37. The third arrangement section 40 is connected to the elevating unit 43 to vertically move by vertical movement of the elevating unit 43. With the movement of the third arrangement section 40, the third container 39 also vertically moves.

The liquid surface sensor 41 is a sensor for detecting a liquid surface of a liquid in the third container 39. The liquid surface sensor 41 has, for example, a stick shape, and is arranged vertically extending above the third container 39. When the liquid surface sensor 41 detects the liquid surface of the liquid in the third container 39 during elevation of the elevating unit 43, the detection signal of the liquid surface sensor 41 is sent to the controller 50. The controller 50 that has received the detection signal stops the elevation of the elevating unit 43 at the position at which the end of the aspiration nozzle 42 is dipped in the liquid.

The aspiration nozzle 42 aspirates the liquid in the third container 39 by drive of the pump 46. When the liquid aspirated by the aspiration nozzle 42 is a mixture of the reaction liquid and the first liquid, the optical measuring unit 45 optically measures the mixture in the fourth flow path 44. The liquid aspirated after the optical measurement is discharged to the waste liquid tank 25 via the fourth flow path 44, the pump 46, and a fifth flow path 47. In addition, when the amount of the liquid supplied through the third flow path 38 exceeds the volume of the third container 39, the excess liquid is discharged to the waste liquid tank 25 via a sixth flow path 48.

By the way, since the self-feeding pump 37 feeds the first liquid, an operator who exchanges the self-feeding pump 37 in which the first liquid remains on the inner wall may be ill affected. Thus, in First Embodiment, by exchanging the self-feeding pump 37 after the concentration of the first liquid remaining on the inner wall of the self-feeding pump 37 is reduced, the safety of the operator is ensured.

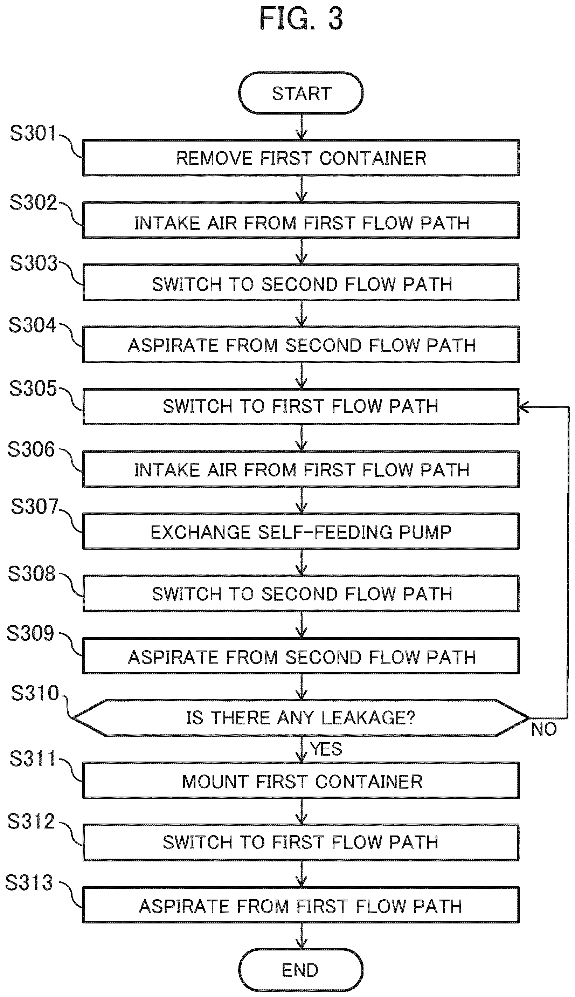

Referring to Fig. 3, one example of processing of First Embodiment is explained at each step.

### (S301)

The control unit 51 displays a message on the input and output unit 53 to instruct removal of the first container 30. The operator removes the first container 30 from the first arrangement section 31 in accordance with the instruction displayed on the input and output unit 53.

### (S302)

The operator who has removed the first container 30 inputs, into the input and output unit 53, that the removal of the first container 30 is complete. The control unit 51 that has received the input from the input and output unit 53 drives the self-feeding pump 37 to aspirate air from the end of the first flow path 32 after controlling the switching unit 33 to open the flow path from the first flow path 32 to the third flow path 38. The aspiration of air from the first flow path 32 is performed until the liquid remaining in the first flow path 32, the self-feeding pump 37, and the third flow path 38 is discharged to the third container 39. Note that, when the first arrangement section 31 includes a sensor for detecting the presence or absence of the first container 30, the control unit 51 may control the switching unit 33 and the self-feeding pump 37 based on the detection signals outputted from the sensor. The execution of S302 causes the control unit 51 to function as an aspirating unit that aspirates air from the first arrangement section 31 to fill the self-feeding pump 37 with the air.

### (S303)

After the first flow path 32 is filled with the air, the control unit 51 stops the self-feeding pump 37, and then controls the switching unit 33 to switch the flow path from the second flow path 36 to the third flow path 38.

### (S304)

The control unit 51 drives the self-feeding pump 37 to aspirate the first liquid from the second container 35 through the second flow path 36. The aspiration from the second container 35 is performed until the second flow path 36, the self-feeding pump 37, and the third flow path 38 are filled with the second liquid. The execution of S304 causes the control unit 51 to function as a replacing unit that replaces the liquid inside the self-feeding pump 37 with the second liquid.

### (S305)

After the second flow path 36, the self-feeding pump 37, and the third flow path 38 are filled with the second liquid, the control unit 51 stops the self-feeding pump 37, and then controls the switching unit 33 to switch the flow path from the first flow path 32 to the third flow path 38.

### (S306)

The control unit 51 drives the self-feeding pump 37 to aspirate air from the end of the first flow path 32. The aspiration of air from the first flow path 32 is performed until the second liquid remaining in the self-feeding pump 37 and the third flow path 38 is discharged to the third container 39.

### (S307)

After the first flow path 32, the self-feeding pump 37, and the third flow path 38 are filled with the air, the control unit 51 displays, on the input and output unit 53, a message to instruct exchange of the self-feeding pump 37. The operator exchanges the self-feeding pump 37 based on the instruction displayed on the input and output unit 53.

### (S308)

The operator who has exchanged the self-feeding pump 37 inputs, into the input and output unit 53, that the exchange of the self-feeding pump 37 is complete. The control unit 51 that has received the input from the input and output unit 53 controls the switching unit 33 to switch the flow path from the second flow path 36 to the third flow path 38.

### (S309)

The control unit 51 drives the self-feeding pump 37 to aspirate the first liquid from the second container 35 through the second flow path 36. The aspiration from the second container 35 is performed until the second flow path 36, the self-feeding pump 37, and the third flow path 38 are filled with the second liquid.

### (S310)

It is determined whether or not there is a leakage from the self-feeding pump 37. Whether or not there is the leakage may be visually determined by the operator, or may be determined based on the amount of the liquid fed by the self-feeding pump 37 during a predetermined duration. That is, the liquid surface sensor 41 measures the amount of the liquid fed to the third container 39 during the predetermined duration. When a difference between the measurement values before and after the exchange of the self-feeding pump 37 is more than a threshold, it is determined that there is the leakage. In addition, a leakage sensor provided to the self-feeding pump 37 may determine whether or not there is the leakage. When there is no leakage, the processing proceeds to S311. When there is the leakage, the processing is returned to S305 to reattach the self-feeding pump 37. Note that, when the self-feeding pump 37 exchanged at S307 is damaged, the damaged self-feeding pump 37 is exchanged to the new self-feeding pump 37. The execution of S310 causes the control unit 51 to function as a determining unit to determine whether or not there is the leakage from the self-feeding pump 37.

### (S311)

The control unit 51 displays, on the input and output unit 53, a message to instruct attachment of the first container 30. The operator attaches the first container 30 to the first arrangement section 31 based on the instruction displayed on the input and output unit 53.

### (S312)

The operator who has attached the first container 30 inputs, into the input and output unit 53, that the attachment of the first container 30 is complete. The control unit 51 that has received the input from the input and output unit 53 stops the self-feeding pump 37, and then controls the switching unit 33 to switch the flow path from the first flow path 32 to the third flow path 38. Note that, when the first arrangement section 31 includes a sensor for detecting the presence or absence of the first container 30, the control unit 51 may control the self-feeding pump 37 and the switching unit 33 based on the detection signals outputted from the sensor.

### (S313)

The control unit 51 drives the self-feeding pump 37 to aspirate the first liquid from the first container 30 through the first flow path 32. The aspiration from the first container 30 is performed until the first flow path 32, the self-feeding pump 37, and the third flow path 38 are filled with the first liquid.

Through the processing explained in reference to Fig. 3, the safety of the operator who exchanges the self-feeding pump 37 feeding the first liquid can be ensured. That is, since the inside of the self-feeding pump 37 is filled with the second liquid, the concentration of the first liquid remaining on the inner wall of the self-feeding pump 37 is reduced, and the safety of the operator who exchanges the self-feeding pump 37 can be ensured.

In addition, since the self-feeding pump 37 feeds the first liquid and the second liquid, a priming procedure, which is required in non-self-feeding pumps, is unnecessary at S313, and the self-feeding pump 37 is easily exchangeable. Note that the configuration around the self-feeding pump 37 is not limited to that of Fig. 2.

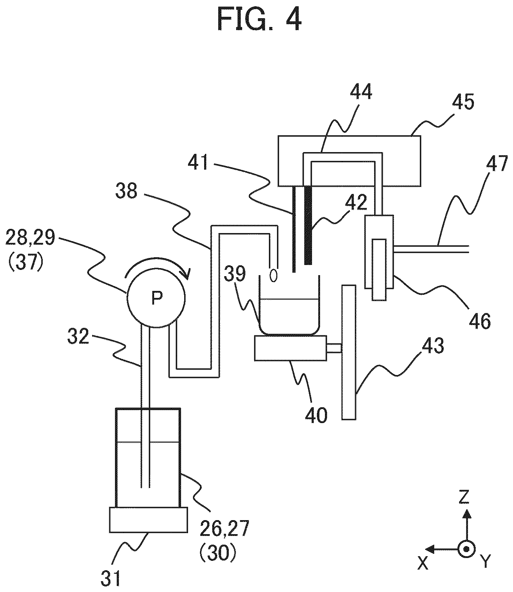

Referring to Fig. 4, another example of the configuration around the self-feeding pump 37 is explained. The configuration of Fig. 4 is such that the second arrangement section 34, the second flow path 36, and the switching unit 33 are removed from that of Fig. 2. In the configuration of Fig. 4, the first container 30 arranged on the first arrangement section 31 is replaced with the second container 35 to switch the liquid aspirated from the first flow path 32 to the second liquid. In addition, by causing the first container 30 arranged on the first arrangement section 31 to contain the second liquid, the liquid aspirated from the first flow path 32 may be switched to the second liquid.

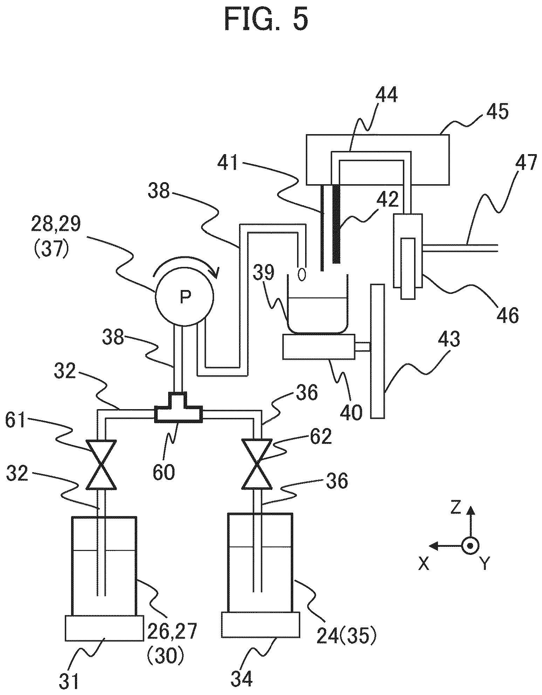

Referring to Fig. 5, another example of the configuration around the self-feeding pump 37 is explained. The configuration of Fig. 5 is such that the switching unit 33 of Fig. 2 is replaced with a connecting unit 60, a first switching unit 61 is provided to the first flow path 32, and a second switching unit 62 is provided to the second flow path 36. The connecting unit 60 simply connects the first flow path 32, the second flow path 36, and the third flow path 38 to each other, and is incapable of switching the flow paths. The first switching unit 61 is a device to switch between the open and closed states of the first flow path 32, and uses, for example, an electromagnetic valve. The second switching unit 62 is a device to switch between the open and closed states of the second flow path 36, and uses, for example, an electromagnetic valve. Note that, when one of the first switching unit 61 and the second switching unit 62 is open, the other is closed. Through such a control for the open and closed states, the liquids and gases aspirated by the self-feeding pump 37 are switched.

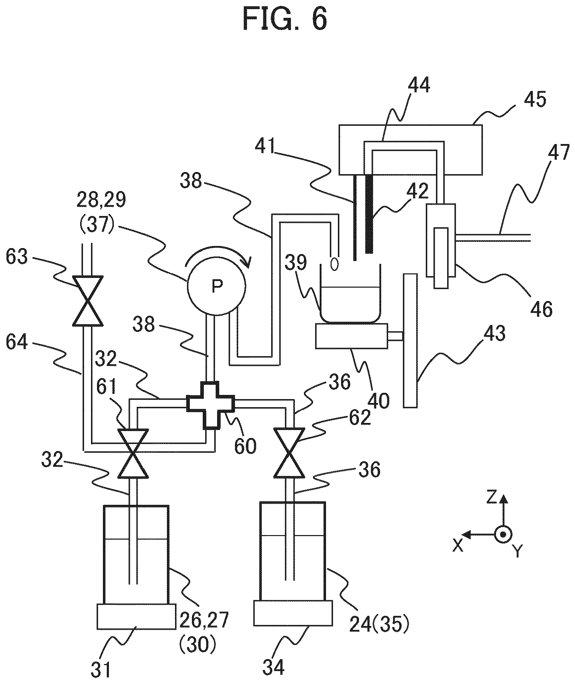

Referring to Fig. 6, another example of the configuration around the self-feeding pump 37 is explained. The configuration of Fig. 6 is such that a seventh flow path 64 is further connected to the connecting unit 60 of Fig. 5, and a third switching unit 63 is provided to the seventh flow path 64. One end of the seventh flow path 64 is connected to the connecting unit 60, and the other end is open to atmosphere. The third switching unit 63 is a device to switch between the open and closed states of the seventh flow path 64, and uses, for example, an electromagnetic valve. Note that, when any one of the first switching unit 61, the second switching unit 62, and the third switching unit 63 is open, the other two are closed. Through such a control for the open and closed states, the liquids and gases aspirated by the self-feeding pump 37 are switched. In addition, in accordance with the configuration of Fig. 6, the self-feeding pump 37 and the third flow path 38 can be filled with air without removing the first container 30 from the first arrangement section 31.

The embodiments of the present invention have been explained above. The present invention is not limited to the above embodiments, and the components thereof may be modified without departing from the scope of the invention. In addition, the multiple components disclosed in the above embodiments may be adequately combined. Further, some components may be removed from all the components shown in the above embodiments.

### List of Reference Signs

1: incubator, 2: reaction container, 3: sample reagent disk, 4: reagent bottle, 5: sample container, 6: reagent aspiration port, 7: sample aspiration port, 9: dispensing unit, 11: dispensing pump, 13: cleaning chamber, 14: reagent stirring unit, 15: spectrophotometer, 16: detecting unit, 17: carrying unit, 18: dispensing tip, 19: tip tray, 20: container tray, 21: disposal box, 22: tip mounting position, 23: tip disposal port, 24: water feeding tank, 25: waste liquid tank, 26: first liquid bottle, 27: cleaning liquid bottle, 28: first liquid pump, 29: cleaning liquid pump, 30: first container, 31: first arrangement section, 32: first flow path, 33: switching unit, 34: second arrangement section, 35: second container, 36: second flow path, 37: self-feeding pump, 38: third flow path, 39: third container, 40: third arrangement section, 41: liquid surface sensor, 42: aspiration nozzle, 43: elevating unit, 44: fourth flow path, 45: optical measuring unit, 46: pump, 47: fifth flow path, 48: sixth flow path, 50: controller, 51: control unit, 52: storing unit, 53: input and output unit, 60: connecting unit, 61: first switching unit, 62: second switching unit, 63: third switching unit, 64: seventh flow path, 100: automatic analyzer

## Claims

1. An automatic analyzer comprising:
a first arrangement section in which a first container for containing a first liquid that ill affects a human body and/or equipment is arranged;
a second arrangement section in which a second container for containing a second liquid that does not ill affect the human body and/or the equipment is arranged; and
a self-feeding pump that feeds the first liquid and the second liquid to a third container arranged in a third arrangement section, wherein
the self-feeding pump is exchanged after the second liquid is fully supplied to fill the inside thereof.

2. The automatic analyzer according to claim 1, wherein
the self-feeding pump is exchanged after the second liquid filling the inside is discharged.

3. The automatic analyzer according to claim 1, further comprising
a determining unit that determines whether or not there is a leakage from the self-feeding pump.

4. The automatic analyzer according to claim 3, wherein
the determining unit determines that there is
the leakage when a difference in the amount of the liquid supplied before and after exchange of the self-feeding pump is more than a threshold.

5. An automatic analyzer comprising:
a first arrangement section in which a first container for containing a first liquid that ill affects a human body and/or equipment;
a second arrangement section in which a second container for containing a second liquid that does not ill affect the human body and/or the equipment is arranged;
a third arrangement section in which a third container for containing a liquid supplied from the first container and/or the second container is arranged;
a first flow path in which the first liquid is supplied from the first container;
a second flow path in which the second liquid is supplied from the second container;
a third flow path formed by confluence of the first flow path and the second flow path;
a self-feeding pump, arranged on the path of the third flow path, for feeding the liquid supplied from the first container or the second container to the third container;
a switching unit that switches which liquid of the first flow path and the second flow path is supplied to the third flow path;
a replacing unit that replaces the liquid inside the self-feeding pump with the second liquid when an operators exchanges the self-feeding pump; and
an aspirating unit that aspirates air from the first arrangement section to fill the self-feeding pump with the above air when an operator removes the first container from the first arrangement section and when the switching unit switches the flow path to the first flow path, wherein
the switching unit switches the flow path to the second flow path when an operator mounts a new self-feeding pump.

6. The automatic analyzer according to claim 5, wherein
the switching unit further includes a determining unit that determines whether or not there is a leakage from the new self-feeding pump, when an operator mounts the new self-feeding pump, to switch to the second flow path.

7. A method of exchanging a self-feeding pump for feeding a first liquid that ill affects a human body and/or equipment, comprising
a step of supplying the second liquid until the second liquid that does not ill affect the human body and/or the equipment fills the inside of the self-feeding pump;
a step of discharging the second liquid from the self-feeding pump; and
a step of exchanging the self-feeding pump.
